# EUROPÄISCHE PATENTSCHRIFT

(11) **EP 0 930 439 B1**
(45) Veröffentlichungstag und Bekanntmachung des Hinweises auf die Patenterteilung: **21.05.2003**
(21) Anmeldenummer: 98123730.8
(22) Anmeldetag: 14.12.1998
(51) Int. Cl.: F16B 37/02

(54) **Verbindung zumindest zweier übereinanderliegender Bleche mit einer Gewindefurch-Schraube**
Fastening of at least two superposed sheets by means of a self-tapping screw
Fixation d'au moins deux tôles l'une sur l'autre au moyen d'une vis auto-foreuse

(30) Priorität: 15.01.1998 DE 19801653
(43) Veröffentlichungstag der Anmeldung: 21.07.1999
(73) Patentinhaber: Bayerische Motoren Werke Aktiengesellschaft, 80788 München (DE)
(72) Erfinder: Baumann, Ludwig, 86690 Mertingen (DE); Schubert, Werner, 80807 München (DE)

(56) Entgegenhaltungen:
- EP-A- 0 790 416
- DE-A- 2 556 137
- US-A- 3 137 196
- US-A- 5 230 137

## Beschreibung

Eine derartige Verbindung ist in der Druckschrift EP-A-0 790 416 dargestellt.

Die Erfindung betrifft eine Verbindung zumindest zweier übereinander liegenden Bleche mit einer Gewindefurch-Schraube, insbesondere eines im Bereich der Schraubverbindung mit Ausnahme eines Schrauben-Durchgangs-Loches für die Schraube im wesentlichen unverformten Blech-Anschlußbauteiles mit einem Blechteil, an welchem der Randbereich des Schrauben-Loches mit einem umlaufenden Kragen ausgeformt ist, in den sich die Gewindefurch-Schraube einschneidet, wobei in dem Blechteil anschließend an den Kragen mehrere sich radial zur Längsachse der Schraube und des Loches erstreckende, gegenüber der dem Anschlußbauteil zugervandten Oberfläche vertiefte Verprägungen vorgesehen sind. Dabei ist der Begriff des "Einschneidens" nicht als spanabhebende Verformung zu verstehen, sondern als "Einformen", bei welchem - wie dem Fachmann bekannt ist - die Gewindefurch-Schraube das sog. "Gegen-Gewinde" im umlaufenden Kragen durch Materialverdrängung herstellt, wodurch sich eine vorteilhafte Gefügeverfestigung und somit Verdichtung des Kragenmaterials im Gewindebereich ergibt.

Inbesondere handelt es sich bei den gemäß der Erfindung miteinander zu verbindenen Blechen um relativ dünnwandige Blechteile, wie sie bspw. im Fahrzeugbau, d.h. bevorzugt in der Automobilindustrie Anwendung finden.

Weiterhin betrifft die Erfindung eine Vorrichtung zur Herstellung eines Schrauben-Loches mit einem umlaufenden Kragen sowie mit mehreren sich bezüglich dessen Längsachse in radialer Richtung erstreckenden Verprägungen in einem Blechteil, welches Bestandteil einer erfindungsgemäßen Verbindung zumindest zweier übereinanderliegender Bleche ist.

Speziell in der Automobilindustrie werden in Blechkonstruktionen, die nur eine begrenzte Einschraubtiefe bieten, vielfach genormte Anschweiß- oder Annietmuttern verwendet. Weiterhin ist es bekannt, Blechmuttern einzusetzen, die im wesentlichen aus einer Basisplatte bestehen, die wenigstens einen Bruchteil eines Gewindeganges aufweisen. Die Blechmuttern können als das Blechteil umgreifende klammerförmige Klipsmuttern ausgebildet sein. In den Fällen, in denen keine klammerförmigen Klipsmuttern Verwendung finden, da der Umgriff der Blechmutter um das Blechteil nicht erwünscht ist, müssen die Blechmuttern auf andere Weise am Blechteil fixiert werden. Hierzu werden die Blechmuttern beispielsweise punktgeschweißt oder mittels mehr oder weniger aufwendig gestalteten Befestigungsvorrichtungen des Blechteils mit diesem verbunden. Möglichkeiten zur Ausgestaltung des Blechteils zur Aufnahme von Blechmuttern können beispielsweise der DE 30 45 659 A1 oder der DE 26 36 654 C2 entnommen werden.

Nachteilig bei diesen bekannten Verfahren zur Anbringung einer Mutter an einem Blechteil ist, daß die Mutter als Einzelteil zum Einsatz kommt, für dessen Handhabung und Fixierung am Blechteil zusätzliche Arbeitsgänge und/oder Fertigungseinrichtungen erforderlich sind. Darüber hinaus muß zum Anbringen der Mutter die Zugänglichkeit des Blechteils auf der der Anlageseite eines Anschlußbauteils abgewandten Seite gewährleistet sein. Weiterhin gestaltet sich der Korrosionsschutz im Verschraubungsbereich durch die zahlreichen Spalte und Hohlräume zwischen Mutter, Blechteil und Anschlußbauteil besonders schwierig.

Um die sich durch die Mutter als zusätzliches Bauteil ergebenden Nachteile zu vermeiden, werden oftmals die Blechteile nur mit einem Loch versehen, in das Blechschrauben oder sogenannte Gewindefurchschrauben eingesetzt werden, die sich beim Eindrehen ihr Gewinde selbst schneiden. Hierbei ist es durchaus üblich, daß das Loch in dem Blechteil kragenförmig ausgebildet wird, wie dies beispielsweise dem DE-Fachbuch Steinhilper, W., Maschinenund Konstruktionselemente, Band 1, 4.Auflage 1994, Springer-Verlag, S.318, zu entnehmen ist. Auf diese Weise erreicht man eine Vergrößerung der Einschraubtiefe und einen Klemmeffekt durch die sich beim Anziehen der Schraube in den Gewindegrund stemmende Kragenwand.

Andererseits geht hierbei jedoch dadurch, daß auf die Mutter als zusätzliches Bauteil verzichtet wird, auch deren Versteifungseffekt für das dünnwandige Blechteil verloren. Weiterhin ist auch diese Lösung in bezug auf den Korrosionsschutz insofern als nicht befriedigend anzusehen, als das Anschlußbauteil im Verschraubungsbereich auf dem Blechteil flächig aufliegt. Hierdurch ist es nicht möglich, den Verschraubungsbereich nachträglich, d.h. nach dem Anschrauben des Anschlußbauteils beispielsweise durch Tauchen in einem Lack- oder Korrosionsschutzmittelbad vor Korrosion zu schützen. Gleichzeitig wird einmal eingedrungenes Wasser in dem engen Spalt zwischen Blechteil und Anschlußbauteil über lange Zeit festgehalten.

Diesbezüglich geringfügig günstiger ist die in der EP-A-0 790 416 gezeigte Schraubverbindung, bei welcher im sog. Blechteil Sicken vorgesehen sind. Diese Sicken dienen der Versteifung des Blechteiles im Bereich des Schrauben-Loches und sind insbesondere im Bereich des sog. Kragens (dort "Napf" genannt) vorgesehen, erstrecken sich dabei jedoch auch in die dem Anschlussbauteil zugewandte Oberfläche des Blechteils hinein.

Ausgehend hiervon eine diesbezüglich weiter verbesserte Blech-Verbindung nach dem Oberbegriff des Anspruchs 1 aufzuzeigen, ist daher Aufgabe der vorliegenden Erfindung.

Diese Aufgabe wird erfindungsgemäß durch die Merkmale des ersten Anspruchs gelöst. Vorteilhafte Aus- und Weiterbildungen sind Inhalt der Unteransprüche. Insbesondere ist hierin auch eine Vorrichtung zur Herstellung eines Schrauben-Loches mit einem umlaufenden Kragen sowie mit mehreren sich bezüglich dessen Längsachse in radialer Richtung erstreckender Verprägungen in einem Blechteil, welches Bestandteil einer erfindungsgemäßen Verbindung zumindest zweier übereinanderliegender Bleche ist, angegeben.

In Ergänzung zum bekannten Stand der Technik sind erfindungsgemäß am das Schrauben-Loch aufweisenden Blechteil im Anschluss an den Kragen sogenannte erhabene und vertiefte Verprägungen zumindest bezüglich der dem Anschlussbauteil zugewandten Oberfläche des Blechteils vorgesehen. Mit diesen Verprägungen, die auch als gegenüber der dem Anschlussbauteil abgewandten Oberfläche des Bleches als vertieft und erhöht bezeichnet werden können, ergibt sich über weite Bereiche ein Abstand zwischen dem Blechteil sowie dem mit diesem zu verbindenden Anschlussbauteil, so dass in dem von diesen Verprägungen gebildeten Taschen oder Zwischenräume auch nach Herstellen der Verbindung, d.h. nach dem Eindrehen der Gewindevorschraube, Korrosionsschutzmittel oder Lack eindringen kann. Eine erfindungsgemäße Blechverbindung kann somit deutlich besser gegen Korrosion geschützt werden als bisher üblich.

Ferner versteifen diese Verprägungen diejenigen Bereiche des Blechteils, in welchem über die Schraube die Kräfte eingeleitet werden. Darüber hinaus wirken diese Verprägungen wie eine zwischen die miteinander zu verbindenden Blechteile eingelegte Federscheibe, so dass eine Schraubverbindung mit vergrößerter Vorspannkraft hergestellt werden kann. Dabei kommen die genannten Effekte noch weiter verstärkt zum Tragen, weil am Blechteil zusätzlich auf der dem Anschlussbauteil zugewandten Oberfläche erhabene Verprägungen vorgesehen sind, da diese dann als zusätzliche Distanzstellen zwischen dem Blechteil und dem Anschlussbauteil wirken.

Nach einer bevorzugten Ausgestaltung der Erfindung sind im Blechteil strahlenförmig von der Längsachse des Schrauben-Loches bzw. der Schraube ausgehend abwechselnd gegenüber der dem Anschlussbauteil zugewandten Oberfläche vertiefte und erhabene Verprägungen vorgesehen. All diese Verprägungen können sich, wie eine andere Weiterbildung der Erfindung vorschlägt, dabei in radialer Richtung über eine dem 1,2-fachen bis 2-fachen Durchmesser der Schraube entsprechenden Länge erstrecken.

Anspruch 4 beschreibt eine Vorrichtung, um in einem Arbeitsgang und mit einem Werkzeug sowohl das Schrauben-Loch als auch den umlaufenden Kragen sowie die erhabenen und vertieften Verprägungen herzustellen. Damit wird die Herstellung besonders rationell und preiswert.

Im folgenden wird die Erfindung anhand eines bevorzugten Ausführungsbeispiels näher erläutert. Es stellen dar:
- Figur 1: eine Draufsicht im Teilschnitt auf ein Blechteil mit einem kragenförmigen Schrauben-Loch und Verprägungen im Anschlussbauteil,
- Figur 2: einen vereinfachten Querschnitt entlang der Linie A-A der Figur 1,
- Figur 3: einen vereinfachten Querschnitt entlang der Linie B-B aus Figur 1,
- Fig. 4: eine perspektivische Ansicht eines Stempels,
- Fig. 5: eine perspektivische Ansicht einer zu dem Stempel von Fig. 4 gehörenden Matrize,

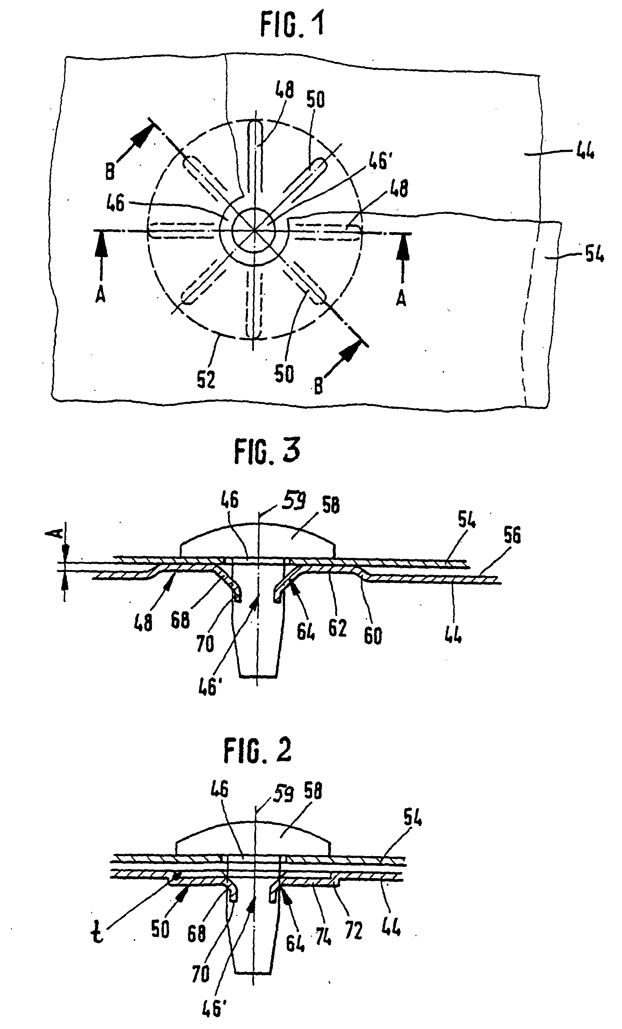

Die Figuren 1 bis 3 zeigen in vereinfachter Darstellung eine Schraubverbindung zwischen einem mittels einer geeigneten und später noch näher beschriebenen Vorrichtung (=Umformwerkzeug) umgeformten (bevorzugt relativ dünnwandigen) Blechteil 44 und einem darüber liegenden ebenfalls als dünnwandiges Blechteil ausgebildetem sog. Anschlußbauteil 54. Letzteres weist ein Schrauben-Durchgangs-Loch 46 auf, über weiches es mittels einer Schraube 58 an dem Blechteil 44 befestigt ist, wobei der nicht näher bezeichnete Kopf der Schraube 58 wie üblich auf der dem Blechteil 44 abgewandten Oberfläche des Anschlußbauteiles 54 aufliegt.

Die Schraube 58 ist eine sogenannte Gewindefurchschraube, die sich ihr Gewinde beim Eindrehen in das Blechteil 44 selbst eindreht. Hierzu weist das Blechteil 44 ein als Mutter dienendes Schrauben-Loch 46' auf, das von einem insgesamt mit 64 bezeichneten Kragen umgeben ist. Dieser Kragen 64 besitzt einen zylindrischen Abschnitt 70 und einen weiter außen liegenden konischen Abschnitt 68. Der Innendurchmesser des von dem zylindrischen Abschnitt 70 des Kragens 64 begrenzten Schrauben-Loches 46' ist geringer als der Durchmesser der Schraube 58, so daß sich diese beim Eindrehen mit ihrem Gewinde in den zylindrischen Abschnitt 70 einschneidet.

Das Schrauben-Loch 46' wird ebenso wie der Kragen 64 durch einen Umformprozess erzeugt bzw. gestanzt und entsprechend geformt. In diesem Prozess wird auch ein weiterer Bereich des Blechteiles 44 umgeformt und zwar ein sog. durch die gestrichelte Linie 52 begrenzter Umformbereich. In diesem wird das Blechteil 44 mit radial verlaufenden länglichen Verprägungen 48 und 50 versehen, wobei die Verprägungen 48 bezüglich der dem Anschlußbauteil 54 zugewandten Oberfläche 56 erhaben und die Verprägungen 50 gegenüber dieser Oberfläche 56 vertieft sind.

Die wulstförmigen Verprägungen 48 haben im Querschnitt einen äußeren, in Richtung auf das Anschlußbauteil 54 ansteigenden Abschnitt 60, an den sich ein im wesentlichen parallel zu der Oberfläche 56 verlaufender Abschnitt 62 anschließt. Die Verprägungen 50 sind sickenförmig ausgestaltet mit einem von der Oberfläche 56 des Blechteils nach unten verlaufenden äußeren Abschnitt 72 und einem im wesentlichen parallel zur Oberfläche 56 angeordneten Abschnitt 74.

Unter anderem versteifen die Verprägungen 48 und 50 denjenigen Bereich des Blechteiles 44, in den über die Schraube 58 Kräfte eingeleitet werden, und sorgen somit für einen insgesamt günstigen Kraftfluß im Blechteil 44. Darüberhinaus wirken die Verprägungen 48 und 50 ähnlich einer zwischen das Blechteil 44 und das Anschlußbauteil 54 eingelegten Federscheibe und erhöhen somit die Spannkraft der Schraubverbindung.

Insbesondere jedoch gewährleisten die wulstförmigen, über die Oberfläche 56 erhabenen Verprägungen 48, daß das Anschlußbauteil 54 in einem definierten Abstand A zum Blechteil 44 zu liegen kommt. Dieser Abstand A wird so gewählt, daß er ausreichend ist, um in den Zwischenraum zwischen Blechteil 44 und Anschlußbauteil 54 der fertigen Schraubverbindung ein Korrosionsschutzmittel oder einen Lack einzubringen, wodurch die Korrsionsbeständigkeit einer solchen gezeigten Verbindung zweier übereinander liegender Bleche gegenüber dem bekannten Stand der Technik deutlich verbessert werden kann.

Im übrigen kann eine derartige Verbesserung der Korrosionsbeständigkeit durch vereinfachtes Eindringen von Lack oder Korrsionsschutzmittel durch die gegenüber der Oberfläche 56 vertieften Verprägungen 50 noch weiter verbessert werden, da durch diese sog. Taschen, deren Tiefe mit t bezeichnet ist, gebildet werden, in die Lack oder Korrsionsschutzmittel eindringen kann.

Im Folgenden wird ein Ausführungsbeispieleines Umformwerkzeuges zur Erzeugung des durch die Linie 52 begrenzten sog. Umformbereiches des Blechteiles 44 beschrieben:

Der in Fig. 4 dargestellte, insgesamt mit 39bezeichnete Stempel weist einen zylindrischen Schaft 12 auf, dessen oberes, figürlich nicht dargestelltes Ende als Aufnahmevorrichtung dient. Das figürlich dargestellte untere Ende des Schafts 12 wird durch einen sog.Umformbereich gebildet, der im wesentlichen drei konzentrische Umformzonen beinhaltet. Die äußerste Umformzone ist eine Prägezone 18, an die sich eine sog. Kragenbildungszone anschließt, die neben einem zylindrischen Abschnitt 21 einen konischen Abschnitt 19 aufweist. Die innerste Umformzone ist eine kreisförmige, von einem zylindrischen Schaft 23 getragene Stanzzone 22.

Die Prägezone 18 weist vier längliche, gegenüber der Längsachse 59' des Stempels 39radial verlaufende erhabene Prägewülste 24 auf, die sich bis in den konischen Abschnitt 19 der Kragenbildungszone erstrecken. Die Kragenbildungszone läuft von dem konischen Abschnitt 19 in einen weiter innen liegenden zylindrischen Abschnitt 21 aus, dessen Ende über einen Radius in den zylindrischen Schaft 23 der Stanzzone 22 mündet.Dabei enthält wie ersichtlich die Prägezone 18 neben den erhabenen Prägewülsten 24 auch vier radial angeordnete vertiefte Prägesicken 40.

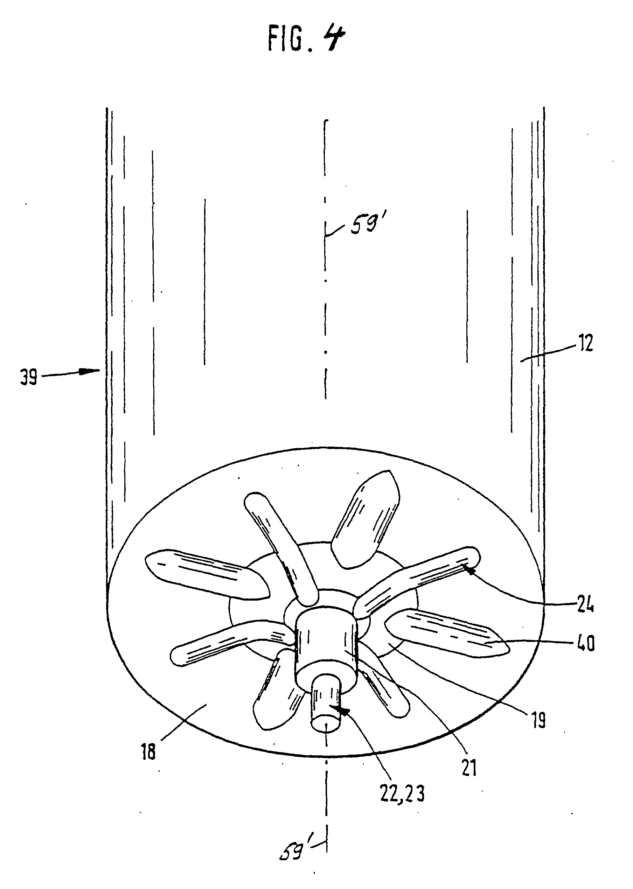

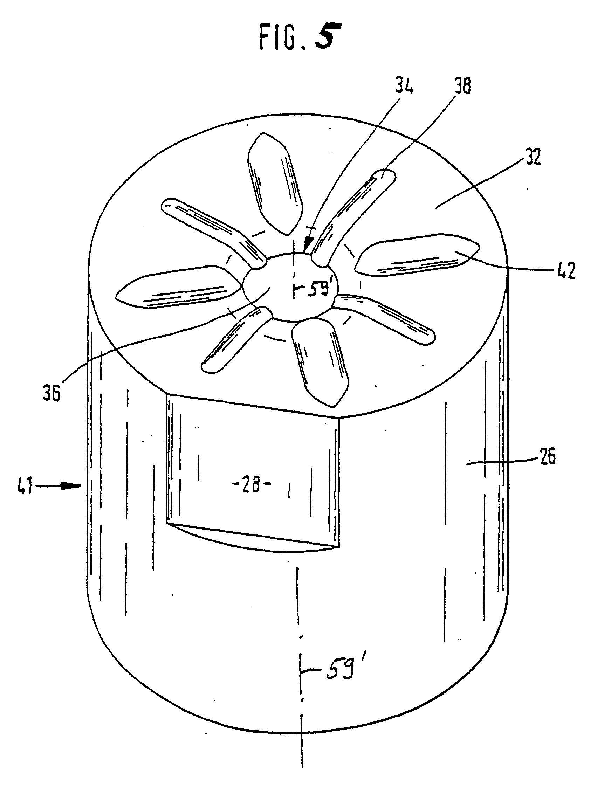

Die insgesamt mit 41 bezeichnete Matrize gemäß Fig. 5 besitzt einen im wesentlichen zylindrischen Schaft 26, der an einem Endabschnitt eine seitliche Fixierfläche 28 aufweist, die zur Klemmung und gleichzeitigen Verdrehsicherung in einer nicht dargestellten Aufnahmevorrichtung dient. Der die seitliche Fixierfläche 28 aufweisende Endabschnitt des Schafts 26 wird durch eine Stirnfläche mit einem sog.Umformbereich begrenzt. Der Umformbereich ist aufgeteilt in eine äußere ringförmige Prägezone 32 und eine innere, als Ganzes mit 34 bezeichnete Kragenbildungszone. Die Kragenbildungszone 34 geht von einem äußeren konischen Abschnitt in einen weiter innen liegenden zylindrischen Abschnitt über, an den sich ein Loch anschließt. Die Prägezone 32 enthält vier bezüglich der Längsachse 59' des Umformwerkzeuges bzw. der Matrize 27 radial verlaufende längliche Prägesicken 38, die sich bis in die Kragenbildungszone 34 erstrecken. Ferner enthält die Prägezone 32 erhabene Prägewülste 42. Die in Fig. 5 gezeigte Matrize 41 bildet als Gegenstück zu dem Stempel 39von Fig. 4 zusammen mit diesem ein Umformwerkzeug, mit dem in das dünnwandiges Blechteil 44 nach den Fig. 1 - 3 ein bei einer Schraubverbindung als Mutter dienendes, mit dem Kragen 64 umgebenes Schrauben-Loch 46' eingebracht werden kann, das mit den beschriebenen radialen Verprägungen 48 und 50 umgeben ist. Dieses Umformwerkzeug besitzt dabei die gemeinsame Längsachse 59', die beim Umformvorgang mit der Längsachse 59 des Schrauben-Loches 46' bzw. mit der gleichen Längsachse 59 der später eingebrachten Gewindefurch-Schraube 58 zusammenfällt.

Beim Umformvorgang wird das zu bearbeitende Blechteil 44 zwischen Stempel 39 und Matrize 41 eingespannt und mittels der genannten Stanzzone 22des Stempels 39zunächst das Schrauben-Loch 46' gestanzt, wobei ein dabei entstehender Abschnitt über das besagte Loch der Matrize 41 abgeführt werden kann. Die Formung des Kragens (Bezugsziffer 64) und der Verprägungen (Bezugsziffern 48, 50) erfolgt unter Druck zwischen komplementären Bereichen der Kragenbildungszonen sowie der Prägezonen 18 und 32 von Stempel 39 bzw. Matrize 41. Hierbei kommen die Prägewülste 24 des Stempels 39mit den Prägesicken 38 der Matrize 41zur Deckung ebenso wie erhabenen Prägewülste 42 der Matrize 41 mit den Prägesicken 40 des Stempels 39. Selbstverständlich kommen auch die konischen und zylindrischen Abschnitte 19 und 21 der Kragenbildungszone des Stempels 39 mit den entsprechenden Abschnitten der Kragenbildungszone 34 der Matrize 27 zur Deckung. Hierdurch werden in das zu bearbeitende Blechteil 44 (wie in Verbindung mit den Figuren 1 bis 3 erläutert) neben dem Kragen 64 die erhabenen und vertieften Verprägungen 48 und 50 eingebracht.

Der Kragen 64 des in einem Blechteil 44 mittels Stempels 39 und Matrize 41 gebildeten Schrauben-Lochs 46' weist neben einem konischen auch einen zylindrischen Abschnitt auf, dessen Länge unter anderem vom Verhältnis des Außendurchmessers der Stanzzone 22 zum Außendurchmesser des zylindrischen Abschnitts 21 der Kragenbildungszone des Stempels 10 abhängt. Der Außendurchmesser des besagten Lochs der Matrize 41sollte um mindestens zweimal die Blechdicke des umzuformenden Blechteils größer sein als der Außendurchmesser des zylindrischen Abschnitts 21 der Kragenbildungszone des Stempels 39, wenn beim Umformvorgang die Blechdicke des zylindrischen Abschnitts (Bezugsziffer 70 in Fig. 2, 3) des Kragens (Bezugsziffer 64) nicht dünner als die Ausgangsblechdicke werden soll.

Wie bereits erläutert, wird insbesondere mit den gegenüber der Oberfläche 56 erhabenen Verprägungen 48 erreicht, daß das Anschlußbauteil 54 in einem durch die Dicke bzw. Höhe der Verprägung 48 definierten Abstand A zum Blechteil zu liegen kommt und zu diesem nur einen Linienkontakt über die radialen Verprägungen 48 hat, so daß die fertige Schraubverbindung von Blechteil und Anschlußbauteil beispielsweise durch Tauchen in ein Korrosionsschutzmittelbad äußerst wirksam gegen Korrosion geschützt werden kann, und zwar auch in dem besonders kritischen Verschraubungsbereich.

### Bezugszeichenliste:

- 12: Schaft
- 14: Schulter
- 18: Prägezone
- 19: Konischer Abschnitt (von 20)
- 21: Zylindrischer Abschnitt (von 20)
- 22: Stanzzone
- 23: Schaft (von 22)
- 24: Prägewulst
- 26: Schaft
- 28: Fixierfläche
- 32: Prägezone
- 34: Kragenbildungszone
- 38: Prägesicke
- 39: Stempel
- 40: Prägesicke
- 41: Matrize
- 42: Prägewulst
- 44: Blechteil
- 46: Schrauben-Durchgangs-Loch
- 46': Schrauben-Loch
- 48: Verprägung
- 50: Verprägung
- 52: Äußere Grenze eines Umformbereichs
- 54: Anschlußbauteil
- 56: Oberfläche (von 44; 54 zugewandt)
- 58: (Gewindefurch-) Schraube
- 59: Längsachse von 58
- 59': Längsachse von 10, 27 bzw. 39, 41
- 60, 62: Abschnitte (von 48)
- 64: Kragen
- 68: Konischer Abschnitt (von 64)
- 70: Zylindrischer Abschnitt (von 64)
- 72, 74: Abschnitte (von 50)

## Patentansprüche

1. Verbindung zumindest zweier übereinander liegender Bleche mit einer Gewindefurch-Schraube (58), insbesondere eines im Bereich der Schraubverbindung mit Ausnahme eines Schrauben-Durchgangs-Loches (46) für die Gewindefurch-Schraube (58) im wesentlichen unverformten Blech-Anschlussbauteils (54) mit einem Blechteil (44), an welchem der Randbereich des Schrauben-Loches (46') mit einem umlaufenden Kragen (64) ausgeformt ist, in den sich die Gewindefurch-Schraube (58) einschneidet, wobei in dem Blechteil (44) anschließend an den Kragen (64) mehrere sich radial zur Längsachse (59) der Schraube (58) und des Loches (46') erstreckende, gegenüber der dem Anschlussbauteil (54) zugewandten Oberfläche (56) vertiefte Verprägungen (50) vorgesehen sind,
**dadurch gekennzeichnet, dass** im Blechteil (44) weiterhin anschließend an dem Kragen (64) mehrere sich radial zur Längsachse (59) der Schraube (58) und des Loches (46') erstreckende, gegenüber der dem Anschlussbauteil (54) zugewandten Oberfläche (56) erhabene Verprägungen (48) vorgesehen sind.

2. Verbindung zweier Bleche nach Anspruch 1,
**dadurch gekennzeichnet, dass** im Blechteil (44) strahlenförmig von der Längsachse (59) ausgehend abwechselnd gegenüber der dem Anschlussbauteil (54) zugewandten Oberfläche (56) erhabene und vertiefte Verprägungen (48, 50) vorgesehen sind.

3. Verbindung mindestens zweier Bleche nach Anspruch 1 oder 2,
**dadurch gekennzeichnet, dass** sich die Verprägungen (48, 50) in radialer Richtung über eine dem 1,2-fachen bis 2-fachen Durchmesser der Schraube (58) entsprechenden Länge erstrecken.

4. Vorrichtung zur Herstellung eines Schraubenloches (46') mit einem umlaufenden Kragen (64) sowie mit mehreren sich bezüglich dessen Längsachse (59) in radialer Richtung erstreckender Verprägungen (48, 50) in einem Blechteil (44), welches Bestandteil einer Verbindung zweier Bleche nach einem der vorangegangenen Ansprüche ist,
**gekennzeichnet durch** ein aus einem Stempel (39) und einer Matrize (41) bestehenden Umformwerkzeug, wobei der Stempel (39) mindestens drei Formgebungszonen enthält, von denen eine erste Zone als Stanzzone (22) eine zweite Zone als Kragenbildungszone (19, 21) und eine dritte Zone als Prägezone (18) ausgebildet ist, und die Matrize (41) mindestens zwei Formgebungszonen enthält, von denen eine erste Zone als Kragenausbildungszone (34) und eine zweite Zone als Prägezone (32) ausgebildet ist und wobei die Prägezone (18) des Stempels erhabene und vertiefte Bereiche (Prägewulste 24, Prägesicken 40) enthält, die mit Bereichen (Prägesicken 38, Prägewulste 42) der Prägezone (32) der Matrize zur Deckung kommen, die als Negativformen in bezug auf die entsprechenden Bereiche des Stempels ausgebildet sind, und die jeweils radial zur Längsachse (59') des Umformwerkzeugs angeordnet sind.

## Claims

1. A connection between two superposed metal sheets via a thread groove screw (58), especially a connection between a sheet-metal connecting component (54), substantially unworked in the region of the screw connection except for a hole (46) for the thread groove screw (58), to a sheet-metal part (44) on which the edge region of the screw hole (46') is formed with a peripheral collar (64) into which the screw (58) cuts a thread, the metal part (44) adjoining the collar (64) being formed with a number of indentations (50) extending radially relative to the longitudinal axis (59) of the screw (58) and hole (46') and recessed relative to the surface (56) facing the connected component (54), **characterised in that** the metal part (44) adjoining the collar (64) is also formed with a number of indentations (48) extending radially relative to the longitudinal axis (59) of the screw (58) and the hole (46') and raised relative to the surface (56) facing the connected component (54).

2. A connection between two metal sheets according to claim 1,
**characterised in that** the metal part (44) is formed with indentations (48, 50) radiating from the longitudinal axis (59) and raised and recessed relative to the surface (56) facing the connected component (54).

3. A connection between at least two metal sheets according to claim 1 or Claim 2,
**characterised in that** the indentations (48, 50) extend in the radial direction over a length equal to 1.2 times to twice the diameter of the screw (58).

4. A device for producing a screw hole (46') with a peripheral collar (64) and with a number of indentations (48, 50) extending radially relative to the longitudinal axis (59) of the hole in a metal part, the metal part being a component of a connection between two metal plates according to any of the preceding claims,
**characterised by** a metal-working tool comprising a punch (39) and a die (41), wherein the punch (39) contains at least three shaping zones, a first or punching zone (22), a second or collar-forming zone (19, 21) and a third or embossing zone (18), and the die (41) contains at least two shaping zones, a first or collar-forming zone (34) and a second or embossing zone (32), and wherein the embossing zone (18) of the punch contains raised and recessed regions (beads 24 and troughs 40) which coincide with regions (troughs 38 and beads 42) of the embossing zone (32) on the die, the indentations on the die being the negatives of the corresponding regions on the punch and being disposed radially relative to the longitudinal axis (59') of the metal-working tool.

## Revendications

1. Assemblage d'au moins deux tôles placées l'une sur l'autre à l'aide d'une vis autotaraudeuse (58), notamment d'une pièce rapportée en tôle (54) pratiquement non déformée dans la zone de la liaison vissée à l'exception d'un orifice de passage (46) pour la vis autotaraudeuse (58), et assemblée à une pièce en tôle (44) ayant une zone de bord du trou à vis (46') formée avec une collerette périphérique (64) dans laquelle la vis autotaraudeuse (58) entaille sa pénétration avec dans la pièce en tôle (44), de façon adjacente à la collerette (64), plusieurs empreintes (50) s'étendant radialement par rapport à l'axe longitudinal (59) de la vis (58) et du trou (46'), ces empreintes étant en creux par rapport à la surface (56) tournée vers la pièce rapportée (54),
**caractérisé en ce que**
dans la pièce en tôle (44), il y a en outre, de façon adjacente à la collerette (64), plusieurs empreintes (48) s'étendant radialement par rapport à l'axe longitudinal (59) de la vis (58) et du trou (46'), ces empreintes étant en relief par rapport à la surface supérieure (56) tournée vers la pièce rapportée (54).

2. Assemblage de deux tôles selon la revendication 1,
**caractérisé en ce que**
la pièce en tôle (44) comporte des empreintes (48, 50) en relief et en creux, rayonnant à partir de l'axe longitudinal (59), alternant par rapport à la surface (56) tournée vers la pièce rapportée (54).

3. Assemblage d'au moins deux tôles selon la revendication 1 ou 2,
**caractérisé en ce que**
les empreintes (48, 50) s'étendent dans la direction radiale sur une longueur correspondant à 1,2 fois jusqu'à 2 fois le diamètre de la vis (58).

4. Dispositif pour réaliser un trou à vis (46') ayant une collerette périphérique (64) et plusieurs empreintes (48, 50) s'étendant dans la direction radiale par rapport à l'axe longitudinal (59) de ce trou dans une pièce en tôle (44), cette pièce faisant partie d'un assemblage de deux tôles selon l'une des revendications précédentes,
**caractérisé par**
un outil de transformation formé d'un poinçon (39) et d'une matrice (41),
le poinçon (39) ayant au moins trois zones de formage parmi lesquelles la première zone est une zone d'estampage (22), une seconde zone est une zone de formation de collerette (19, 21) et une troisième zone est une zone de matriçage (18), et dont
la matrice (41) comporte au moins deux zones de formage dont une première zone est une zone de formation de collerette (34) et une seconde zone est une zone de matriçage (32),
la zone de matriçage (18) du poinçon comportant des zones en relief et en creux (bourrelets de matriçage 24, rainures de matriçage 40) qui correspondent par superposition aux plages (rainures de matriçage 38, bourrelets de matriçage 42) de la zone de matriçage (32) de la matrice, et qui sont réalisées comme des formes négatives par rapport aux zones correspondantes du poinçon et se trouvent chaque fois disposées radialement par rapport à l'axe longitudinal (59') de l'outil de transformation.
